# EUROPÄISCHE PATENTSCHRIFT

(11) **EP 4 215 688 B1**
(45) Veröffentlichungstag und Bekanntmachung des Hinweises auf die Patenterteilung: **21.02.2024**
(21) Anmeldenummer: 22152756.7
(22) Anmeldetag: 21.01.2022
(51) Int. Cl.: E04F 13/08, E04F 21/00, E04F 13/00, B32B 7/12, B32B 21/04, B32B 21/08, B32B 27/06, E04F 13/10, E04F 13/16

(54) **LEISTENFÖRMIGE LAMELLE**
STRIP-SHAPED LAMELLA
LAMELLE EN FORME DE BAGUETTE

(43) Veröffentlichungstag der Anmeldung: 26.07.2023
(73) Patentinhaber: Maria Leitl, Furniere und Laubschnittholz OG, 3423 Wördern (AT)
(72) Erfinder: BYRTEK, Mieczyslaw Kazimierz, 34-326 Zarzecze (PL)
(74) Vertreter: SONN Patentanwälte GmbH & Co KG

(56) Entgegenhaltungen:
- EP-A2- 0 699 545
- WO-A1-2018/158307
- CN-A- 104 234 359
- DE-A1-102005 031 148
- KR-A- 20150 091 568
- US-A- 3 385 743
- US-A- 5 866 220
- US-B1- 10 208 487

## Beschreibung

Die Erfindung betrifft eine leistenförmige Lamelle zur Gestaltung einer Wand- oder Deckenfläche sowie ein entsprechendes Verfahren.

Die Oberflächengestaltung mittels leistenförmiger Lamellen, die üblicherweise gleich breit sind und in regelmäßigen Abständen angeordnet werden, wird zunehmend beliebt, um den optischen Eindruck von Flächen zu beeinflussen. Mit derartigen Gestaltungen kann beispielsweise bei horizontalen Lamellen der Eindruck der Länge oder bei vertikalen Lamellen der Eindruck der Höhe einer Fläche betont werden. Besonders beliebt sind Lamellen mit Holzoptik, z. B. mit Echtholzoberflächen oder holzähnlicher Kunststoffdekoration.

Bekannte Lamellen dieser Art müssen bei der Montage mit geeigneten Befestigungsmitteln kombiniert werden. Sie müssen beispielsweise mit Nägeln oder Schrauben auf einem Untergrund befestigt werden oder mit einem am Untergrund oder auf den Lamellen aufgetragenen Montagekleber versehen und anschließend angeklebt werden.

Eine andere Art der Oberflächengestaltung, nämlich eine vollflächige Verkleidung mit Paneelen, ist in der DE 2 113 755 A1 gezeigt. Dabei werden mit Nut und Feder verbundene Paneele mittels selbstklebender Schaumstoffstreifen unmittelbar an einer Wand befestigt.

Vergleichbare Paneele zur Verkleidung einer Wand sind auch in der WO 2017/017139 A1 offenbart. Dort dienen Klebestreifen zur vorübergehenden Fixierung der Paneele, bevor ein zwischen den Klebestreifen auf der Rückseite der Paneele aufgebrachter Montagekleber aushärtet und eine dauerhafte Fixierung erzielt.

Sehr ähnliche Paneel-Produkte sind auch in der CN 104278811 A und der CN 104234359 A gezeigt.

Nicht an Produkten für eine Oberflächengestaltung, sondern an Leisten einer Unterkonstruktion zeigt die GB 1 379 932 A ein Klebeband als Fixierungshilfe bis ein zusätzlich nötiger Kleber ausgehärtet ist, um die von den Leisten getragenen Paneele dauerhaft zu fixieren.

Die KR 2015 0091568 A betrifft ein flexibles Wanddekormaterial zum Kleben und das Verfahren zu dessen Herstellung.

Die US 3 385 743 A offenbart eine selbstklebende Oberflächenbeschichtung bestehend aus einem Furnierstreifen, hinter dem sich eine Verstärkungsschicht aus Papier befindet, die ihrerseits mit Polyethylen beschichtete ist, um sowohl eine Feuchtigkeits- als auch eine Wärmebarriere zu bilden.

Die CN 104 234 359 A beschreibt eine einfach montierbare Wanddekorationsplatte und deren Herstellungsverfahren.

Die DE 10 2005 031148 A1 betrifft ein Verkleidungselement für den Fußboden oder als Wandverkleidung, das mit einer Nut- und Federverbindung ausgestattet ist, um eine verbesserte Verbindung zwischen den einzelnen Elementen zu gewährleisten.

Die EP 0 699 545 A2 offenbart ein Verfahren zur Herstellung einer hochglanzbeschichteten Furnier aus dünnem Naturholz, das auf der Unterseite mit einer Klebeschicht, z.B. einer doppelseitig klebenden Folie oder ein Transferklebstoff mit Abdeckblatt, versehen ist.

Die US 5 866 220 A betrifft ein Verfahren und Zwischenprodukte zur Herstellung eines repositionierbaren dekorativen Folienmaterials zum Aufbringen auf eine Wand, wie z.B. Tapeten, die einen druckempfindlichen Klebstoff verwenden.

Die WO 2018/158307 A1 offenbart eine Vorrichtung für den Terrassenbau mit Abstandshalter für den Abstand zwischen Terrassendielen.

Es ist eine Aufgabe der Erfindung, die Montage von leistenförmigen Lamellen zur Gestaltung einer Wand- oder Deckenfläche zu vereinfachen und dabei eine Lamelle vorzuschlagen, die zur beabstandeten Montage besonders geeignet ist.

Die Erfindung schlägt eine Lamelle gemäß Anspruch 1 vor, wobei auf einer Rückseite der Lamelle eine Klebefläche vorgesehen ist, wobei die Klebefläche durch ein doppelseitiges Klebeband gebildet und mit einer Schutzfolie abgedeckt ist. Die Schutzfolie schützt die Klebefläche im Auslieferungszustand der Lamelle. Mit anderen Worten weist die Lamelle ein vormontiertes doppelseitiges Klebeband auf. Dadurch kann bei der Montage der Arbeitsschritt des Aufbringens eines Montageklebers auf die Lamelle entfallen.

Als "Lamelle" oder auch Latten oder Leisten werden in diesem Zusammenhang relativ schmale Elemente verstanden, deren Verhältnis von Höhe (Dicke) zu Breite (eines umgebenden Quaders) in einem Bereich von 0,05-3,0 liegt. Als "leistenförmig" werden in diesem Zusammenhang solche Lamellen, Latten oder Leisten verstanden, deren Verhältnis von Breite zu Länge (eines umgebenden Quaders) in einem Bereich von 0,5 % bis 10,0 % liegt. Die Lamelle hat vorzugsweise flache, optional schräge, Seitenflächen. Die Breite der Lamelle beträgt erfindungsgemäß zwischen 20 und 80 mm. Ihre Dicke kann beispielsweise zwischen 2,5 mm und 60 mm betragen, wobei ihre Länge erfindungsgemäß zwischen 1000 mm und 3000 mm beträgt.

Die Lamelle umfasst erfindungsgemäß einen Körper aus Holzwerkstoff mit einer Dekorschicht, wobei sich die Dekorschicht zumindest über eine Vorderseite der Lamelle erstreckt, wobei die Vorderseite eine von der Rückseite mit der Klebeschicht abgewandte Seite der Lamelle ist. Diese Ausführungsform erzielt eine höhere Formstabilität und eine geringere Anfälligkeit für Deformationen als Lamellen aus Vollholz.

Die Dekorschicht erstreckt sich dabei zusätzlich über mindestens eine längsseitige Seitenfläche der Lamelle erstrecken. Die längsseitigen Seitenflächen grenzen über längsseitige Kanten an die Vorderseite und die Rückseite der Lamelle an und sie grenzen über stirnseitige Kanten an die beiden kleineren Stirnseiten der Lamelle an.

In entsprechender Weise schlägt die Erfindung ein Verfahren zur Gestaltung einer Wand- oder Deckenfläche gemäß Anspruch 8 vor, wobei das Verfahren mindestens eine Wiederholung der folgenden Schritte umfasst:
Abziehen einer Schutzfolie von einem an einer erfindungsgemäßen leistenförmigen Lamelle vormontierten Klebestreifen;
Ankleben der Lamelle an einem Untergrund im Abstand von einer bereits am Untergrund befestigten Lamelle.

Für das Verfahren ist die Reihenfolge der Schritte zwischen den einzelnen Wiederholungen unbeachtlich und die Erfindung ist nicht auf eine bestimmte Reihenfolge zwischen den Wiederholungen beschränkt. Insbesondere müssen sich die Abzieh- und Anklebe-Schritte zwischen den Wiederholungen nicht notwendigerweise abwechseln.

Optional ist das doppelseitige Klebeband der Lamelle zur dauerhaften Fixierung der Lamelle geeignet. Dadurch entfällt die Notwendigkeit zusätzlicher Befestigungsmittel und die Montage wird weiter vereinfacht.

Gemäß einer Ausführungsform dieser Offenbarung kann die Dekorschicht ein Echtholzfurnier aufweisen. Dadurch können die Vorteile der Formstabilität eines Körpers aus Holzwerkstoff mit der vorteilhaften Optik von Echtholz kombiniert werden. Alternativ kann die Dekorschicht beispielsweise eine bedruckte Kunststofffolie aufweisen. Das ermöglicht eine günstigere Herstellung sowie eine praktisch beliebige grafische (zweidimensionale) Oberflächengestaltung.

Der Holzwerkstoff kann beispielsweise ein Holzfaserwerkstoff, insbesondere ein mitteldichtes Holzfasermaterial ("MDF"), hochdichtes Holzfasermaterial ("HDF"), ein Holzspanwerkstoff oder Sperrholz sein.

Die Offenbarung betrifft gemäß einer weiteren Ausführungsform ein System umfassend mindestens eine Lamelle nach einer der oben beschriebenen Varianten sowie einen Abstandhalter, wobei der Abstandhalter zum Aufstecken auf die mindestens eine Lamelle eingerichtet ist. Das System kann insbesondere mehrere Lamellen mit der gleichen Breite umfassen, insbesondere mehrere Lamellen mit gleichen Abmessungen in Breite, Höhe und Länge.

Dementsprechend kann das offenbarte Verfahren weiters beispielsweise die folgenden Schritte vor dem Ankleben der Lamelle umfassen: Aufstecken mindestens eines Abstandhalters auf die anzuklebende Lamelle; und Ausrichten der anzuklebenden Lamelle durch Anlegen des aufgesteckten Abstandhalters an der bereits am Untergrund befestigten Lamelle.

Im selben Zusammenhang kann das offenbarte Verfahren gemäß einem weiteren Beispiel weiters die folgenden Schritte vor dem Ankleben der Lamelle umfassen: Aufstecken mindestens eines Abstandhalters auf die bereits am Untergrund befestigte Lamelle; und Ausrichten der anzuklebenden Lamelle durch Anlegen am aufgesteckten Abstandhalter.

Der Abstandhalter des Systems bzw. die Verwendung eines Abstandhalters im Rahmen des offenbarten Verfahrens stellt eine weitere Vereinfachung der Montage dar, weil damit auf leicht handhabbare und zuverlässige Weise eine regelmäßige und parallele Anordnung der Lamellen erzielbar ist, die für den gewünschten optischen Eindruck vorteilhaft ist.

Optional kann bei dem oben beschriebenen Verfahren der Abstand, in dem die Lamelle am Untergrund angeklebt wird, mindestens dem 0,1-fachen und höchstens dem 1,5-fachen der Breite der bereits am Untergrund befestigten Lamelle entsprechen. Es hat sich herausgestellt, dass in diesem Bereich der erwünschte optische Eindruck wirksam erzielt werden kann.

Dementsprechend kann bei dem oben beschriebenen System der vom Abstandhalter angezeigte Abstand optional mindestens dem 0,1-fachen und höchstens dem 1,5-fachen der Breite der mindestens einen Lamelle entsprechen.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Die Zeichnungen zeigen im Einzelnen:
Fig. 1 schematisch eine perspektivische Ansicht einer leistenförmigen Lamelle gemäß der Erfindung, mit einem doppelseitigen Klebeband welches eine Schutzfolie aufweist;
Fig. 2 schematisch einen Abstandhalter in einer perspektivischen Ansicht, welcher zum Aufstecken auf die Lamelle aus Fig. 1 ausgebildet ist;
Fig. 3 schematisch den Abstandshalter aus Fig. 2 in einer Schnittansicht in einem auf die Lamelle aus Fig. 1 aufgesteckten Zustand und eine weitere daran angelegte Lamelle; und
Fig. 4 schematisch eine Wand- oder Deckenfläche mit mehreren darauf aufgeklebten Lamellen gemäß Fig. 1.

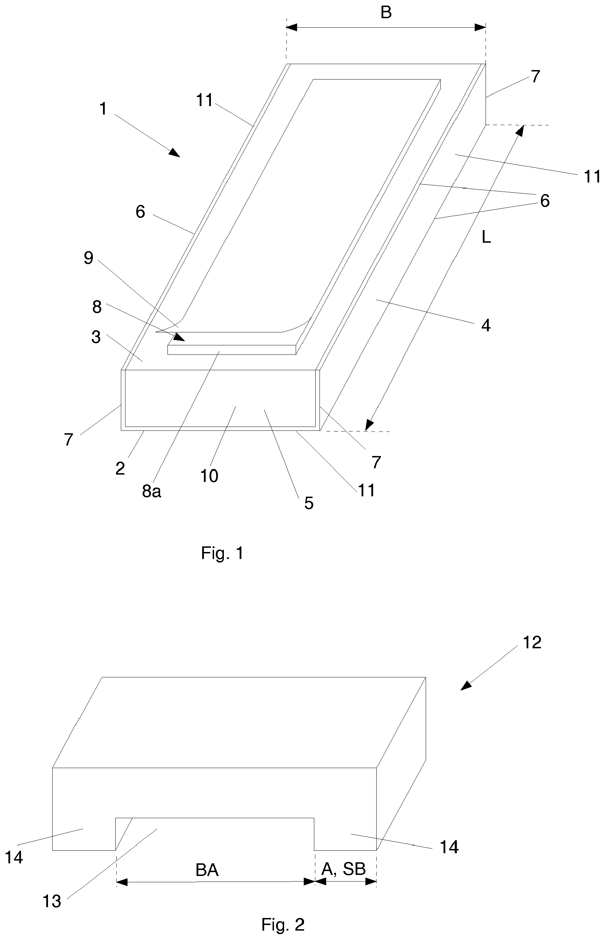

Fig. 1 zeigt eine leistenförmige Lamelle 1 zur Gestaltung einer Wand- oder Deckenfläche F. Die Lamelle 1 weist eine Vorderseite 2, eine dieser gegenüberliegende bzw. von dieser abgewandte Rückseite 3, zwei längsseitige Seitenflächen 4, von welchen in Fig. 1 nur eine sichtbar ist und zwei flächenmäßig kleinere Stirnseiten 5 auf, von welchen in Fig. 1 ebenfalls nur eine sichtbar ist. Die längsseitigen Seitenflächen 4 grenzen über längsseitige Kanten 6 an die Vorderseite 2 und die Rückseite 3 der Lamelle 1 an und sie grenzen über stirnseitige Kanten 7 an die beiden kleineren Stirnseiten 5 der Lamelle 1 an. Die Lamelle 1 weist eine Länge L, eine Breite B und eine Höhe bzw. Dicke H auf. In Fig. 1 ist deutlich erkennbar, dass auf der Rückseite 3 der Lamelle 1 eine Klebefläche 8 vorgesehen ist, wobei die Klebefläche 8 durch ein doppelseitiges Klebeband 8a gebildet und mit einer Schutzfolie 9 abgedeckt ist. Die Schutzfolie 9 ist insbesondere abziehbar ausgebildet und bspw. aus Papier und/oder Kunststoff gebildet. In Fig. 1 ist die Schutzfolie 9 an einem vorderen Ende bereits ein Stück weit vom doppelseitigen Klebeband 8a abgelöst dargestellt. Im nicht dargestellten Auslieferungszustand der Lamelle 1 bedeckt die Schutzfolie 9 die Klebefläche 8 bzw. das doppelseitige Klebeband 8a bevorzugt vollständig, um letztere(s) zu schützen.

Das doppelseitige Klebeband 8a ist bevorzugt zur dauerhaften Fixierung der Lamelle 1 ausgebildet. Die Wahl eines geeigneten doppelseitigen Klebebands 8a kann von einem Fachmann abhängig zumindest vom Untergrund auf welcher die Lamelle 1 angeklebt wird und von der erwarteten Belastung der Lamelle 1 und somit des doppelseitigen Klebebands 8a im angeklebten Zustand der Lamelle 1 zweckmäßig erfolgen. Bevorzugt erstreckt sich das doppelseitige Klebeband 8a über zumindest 90% der Länge L der Lamelle 1. Das Klebeband 8a ist zudem bevorzugt durchgehend ausgebildet, um auch im Fall einer Verkürzung der Lamelle (z.B. durch Absägen) einen möglichst sicheren und vollständigen Halt zu gewährleisten.

Die in Fig. 1 dargestellte Lamelle 1 weist einen Körper 10 aus Holzwerkstoff (z.B. MDF) mit einer Dekorschicht 11 auf, wobei sich die Dekorschicht 11 zumindest über die Vorderseite 2 der Lamelle 1 erstreckt. Im in Fig. 1 dargestellten Beispiel erstreckt sich die Dekorschicht 11 zusätzlich über beide längsseitige Seitenflächen 4 der Lamelle 1. Gemäß einem anderen, nicht dargestellten Ausführungsbeispiel sind die längsseitige Seitenflächen 4 ohne Dekorschicht 11 ausgebildet, d.h. sie sind in diesem Fall durch die Seitenflächen des Körpers 10 gebildet. Der Körper 10 weist im Gegensatz zu Vollholz bevorzugt ein Bindemittel bzw. Klebematerial auf. Besonders bevorzugt ist der Holzwerkstoff ein Holzfaserwerkstoff, insbesondere ein mitteldichtes Holzfasermaterial, hochdichtes Holzfasermaterial ("HDF"), ein Holzspanwerkstoff oder Sperrholz.

Fig. 2 zeigt einen Abstandhalter 12, welcher zum Aufstecken auf die mindestens eine Lamelle 1 eingerichtet ist. Hierfür weist der Abstandhalter 12 eine Ausnehmung 13 auf, in welche ein Teil der Lamelle 1 aufgenommen werden kann. Der Abstandhalter 12 gemäß Fig. 2, welcher etwa in Form eines U bzw. eines umgekehrten U ausgebildet ist, weist beiderseits der Ausnehmung 13 einen Schenkel 14 mit einer Schenkelbreite SB auf, welcher in einem Zustand, in welchem der Abstandhalter 12 auf eine Lamelle 1 aufgesetzt ist, einen Abstand A im Ausmaß der Schenkelbreite SB zu einer benachbarten Lamelle 1 vorgibt. Zweckmäßiger Weise entspricht die Breite BA der Ausnehmung 13 im Wesentlichen der Breite B der Lamelle 1, um eine reibschlüssige Verbindung beim Aufstecken zu erzielen. Der vom Abstandhalter 12 angezeigte Abstand A, d.h. im Beispiel gemäß Fig. 2 die Schenkelbreite SB, entspricht mindestens dem 0,1-fachen und höchstens dem 1,5-fachen der Breite B der mindestens einen Lamelle 1.

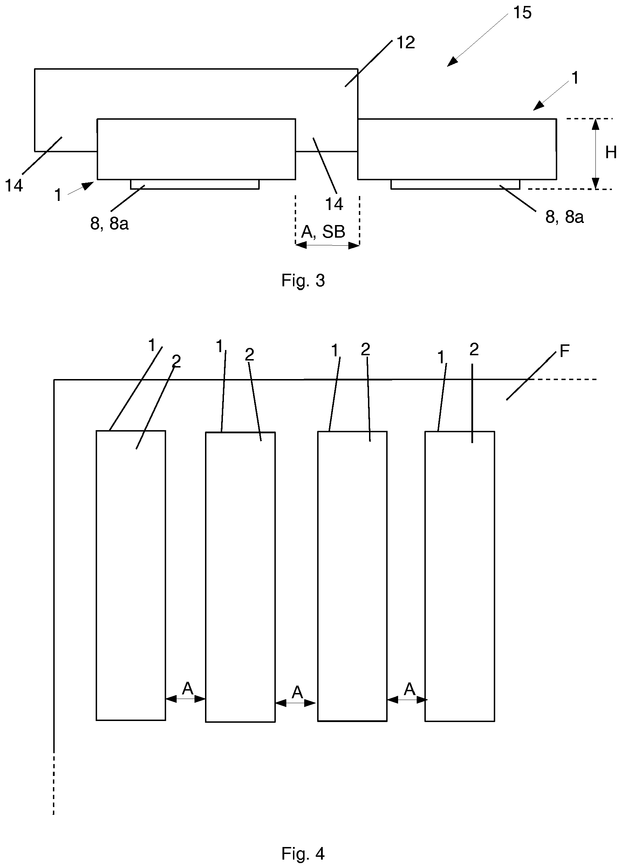

Fig. 3 zeigt in einer Querschnittsansicht den Abstandhalter 12 in einem auf eine Lamelle 1 aufgesteckten Zustand, sowie eine zweite Lamelle 1, die in einem Abstand A gleich der Schenkelbreite SB an den Abstandhalter 12 angelegt ist. Der Abstandhalter 12 und die mindestens eine Lamelle 1 bilden dabei ein System 15.

Fig. 4 zeigt schematisch und nicht maßstabsgetreu, einen Abschnitt einer Wand- oder Deckenfläche F mit mehreren darauf aufgeklebten Lamellen 1, von welchen die Vorderseite 2 sichtbar ist. Die Lamellen 1 sind im Beispiel gemäß Fig. 4 parallel zueinander angeordnet, wobei benachbarte Lamellen 1 einen Abstand A dazwischen aufweisen. In einer andern, nicht dargestellten Ausführungsform können die Lamellen 1 selbstverständlich eine von einer vertikalen Orientierung abweichende Orientierung, bspw. einen horizontalen Längsverlauf, aufweisen. Für eine einfache parallele Montage der Lamellen 1 weist das System 15 zusätzlich zur mindestens einen Lamelle 1 bevorzugt zwei Abstandhalter 12 auf.

## Patentansprüche

1. Leistenförmige Lamelle (1) zur Gestaltung einer Wand- oder Deckenfläche (F), wobei auf einer Rückseite (3) der Lamelle (1) eine Klebefläche (8) vorgesehen ist, wobei die Klebefläche (8) durch ein doppelseitiges Klebeband (8a) gebildet und mit einer Schutzfolie (9) abgedeckt ist, **dadurch gekennzeichnet, dass** die Lamelle (1) einen Körper (10) aus Holzwerkstoff mit einer Dekorschicht (11) umfasst, wobei sich die Dekorschicht (11) zumindest über eine Vorderseite (2) der Lamelle (1) erstreckt, wobei die Vorderseite (2) eine von der Rückseite (3) mit der Klebeschicht (8) abgewandte Seite der Lamelle (1) ist, und wobei sich die Dekorschicht (11) zusätzlich über mindestens eine längsseitige Seitenfläche (4) der Lamelle (1) erstreckt, wobei die Lamelle eine Länge zwischen 1000 mm und 3000 mm und eine Breite zwischen 20 mm und 80 mm aufweist.

2. Lamelle (1) nach Anspruch 1, **dadurch gekennzeichnet, dass** das doppelseitige Klebeband (8a) zur dauerhaften Fixierung der Lamelle (1) geeignet ist.

3. Lamelle (1) nach Anspruch 1 oder 2, **dadurch gekennzeichnet, dass** die Dekorschicht (11) ein Echtholzfurnier aufweist.

4. Lamelle (1) nach Anspruch 1 oder 2, **dadurch gekennzeichnet, dass** die Dekorschicht (11) eine bedruckte Kunststofffolie aufweist.

5. Lamelle (1) nach einem der Ansprüche 1 bis 4, **dadurch gekennzeichnet, dass** der Holzwerkstoff ein Holzfaserwerkstoff, insbesondere ein mitteldichtes Holzfasermaterial, hochdichtes Holzfasermaterial ("HDF"), ein Holzspanwerkstoff oder Sperrholz ist.

6. System (15) umfassend mindestens eine Lamelle (1) nach einem der Ansprüche 1 bis 5 sowie einen Abstandhalter (12), wobei der Abstandhalter (12) zum Aufstecken auf die mindestens eine Lamelle (1) eingerichtet ist.

7. System (15) nach Anspruch 6, **dadurch gekennzeichnet, dass** der vom Abstandhalter (12) angezeigte Abstand (A) mindestens dem 0,1-fachen und höchstens dem 1,5-fachen der Breite (B) der mindestens einen Lamelle (1) entspricht.

8. Verfahren zur Gestaltung einer Wand- oder Deckenfläche (F) durch Anbringung mehrerer leistenförmiger Lamellen (1) nach einem der Ansprüche 1 bis 5, wobei das Verfahren mindestens eine Wiederholung der folgenden Schritte umfasst:
Abziehen einer Schutzfolie (9) von einem an einer leistenförmigen Lamelle (1) vormontierten Klebestreifen (8a);
Ankleben der Lamelle (1) an einem Untergrund im Abstand (A) von einer bereits am Untergrund befestigten Lamelle (1).

9. Verfahren nach Anspruch 8, **dadurch gekennzeichnet, dass** der Abstand (A) mindestens dem 0,1-fachen und höchstens dem 1,5-fachen der Breite (B) der bereits am Untergrund befestigten Lamelle (1) entspricht.

10. Verfahren nach Anspruch 8 oder 9, weiters umfassend die folgenden Schritte vor dem Ankleben der Lamelle (1):
Aufstecken mindestens eines Abstandhalters (12) auf die anzuklebende Lamelle (1); und
Ausrichten der anzuklebenden Lamelle (1) durch Anlegen des aufgesteckten Abstandhalters (12) an der bereits am Untergrund befestigten Lamelle (1).

11. Verfahren nach Anspruch 8 oder 9, weiters umfassend die folgenden Schritte vor dem Ankleben der Lamelle (1):
Aufstecken mindestens eines Abstandhalters (12) auf die bereits am Untergrund befestigte Lamelle (1); und
Ausrichten der anzuklebenden Lamelle (1) durch Anlegen am aufgesteckten Abstandhalter (12).

## Claims

1. A strip-shaped plate (1) for creating a wall or ceiling surface (F), an adhesive surface (8) being provided on a rear side (3) of the plate (1), the adhesive surface (8) being formed by a double-sided adhesive tape (8a) and being covered with a protective film (9), **characterized in that** the plate (1) comprises a body (10) made of wood material having a decorative layer (11), the decorative layer (11) extending at least over a front side (2) of the plate (1), the front side (2) being a side of the plate (1) facing away from the rear side (3) having the adhesive layer (8), and the decorative layer (11) additionally extending over at least one longitudinal side surface (4) of the plate (1), the plate having a length of between 1000 mm and 3000 mm and a width of between 20 mm and 80 mm.

2. The plate (1) according to claim 1, **characterized in that** the double-sided adhesive tape (8a) is suitable for permanently fixing the plate (1).

3. The plate (1) according to either claim 1 or claim 2, **characterized in that** the decorative layer (11) has a real wood veneer.

4. The plate (1) according to either claim 1 or claim 2, **characterized in that** the decorative layer (11) has printed plastics film.

5. The plate (1) according to any of claims 1 to 4, **characterized in that** the wood material is a wood fiber material, in particular a medium-density wood fiber material, a high-density wood fiber material ("HDF"), a wood chip material or plywood.

6. A system (15) comprising at least one plate (1) according to any of claims 1 to 5 and a spacer (12), wherein the spacer (12) is designed to be fitted onto the at least one plate (1).

7. The system (15) according to claim 6, **characterized in that** the distance (A) displayed by the spacer (12) corresponds to at least 0.1 times and at most 1.5 times the width (B) of the at least one plate (1).

8. A method for creating a wall or ceiling surface (F) by attaching a plurality of strip-shaped plates (1) according to any of claims 1 to 5, wherein the method comprises at least one repetition of the following steps:
removing a protective film (9) from an adhesive strip (8a) which is preassembled on a strip-shaped plate (1);
adhering the plate (1) to a substrate at a distance (A) from a plate (1) which is already fastened to the substrate.

9. The method according to claim 8, **characterized in that** the distance (A) corresponds to at least to 0.1 times and at most 1.5 times the width (B) of the plate (1) which is already fastened to the substrate.

10. The method according to either claim 8 or claim 9, further comprising the following steps before adhering the plate (1):
fitting at least one spacer (12) onto the plate (1)to be adhered; and
aligning the plate (1) to be adhered by applying the fitted spacer (12) to the plate (1) which is already fastened to the substrate.

11. The method according to either claim 8 or claim 9, further comprising the following steps before adhering the plate (1):
fitting at least one spacer (12) onto the plate (1) which is already fastened to the substrate; and
aligning the plate (1) to be adhered by applying the fitted spacer (12).

## Revendications

1. Lamelle en forme de réglette (1) pour la formation d'une surface de paroi ou de plafond (F), dans lequel, sur une face arrière (3) de la lamelle (1), est prévue une surface adhésive (8), dans laquelle la surface adhésive (8) est constituée d'une bande adhésive double face (8a) et est recouverte d'un film de protection (9), **caractérisé en ce que** la lamelle (1) comprend un corps (10) en matériau dérivé du bois avec une couche de décoration (11), dans laquelle la couche de décoration (11) s'étend au moins sur une face avant (2) de la lamelle (1), dans lequel la face avant (2) est une face, opposée à la face arrière (3) avec la couche adhésive (8), de la lamelle (1) et dans laquelle la couche de décoration (11) s'étend en outre au moins sur une face latérale longitudinale (4) de la lamelle (1), dans laquelle la lamelle présente une longueur entre 1000 mm et 3000 mm et une largeur entre 20 mm et 80 mm.

2. Lamelle (1) selon la revendication 1, **caractérisée en ce que** la bande adhésive à double face (8a) est conçue pour la fixation durable de la lamelle (1).

3. Lamelle (1) selon la revendication 1 ou 2, **caractérisée en ce que** la couche de décoration (11) présente un placage en bois véritable.

4. Lamelle (1) selon la revendication 1 ou 2, **caractérisée en ce que** la couche de décoration (11) présente un film de matière plastique imprimé.

5. Lamelle (1) selon l'une des revendications 1 à 4, **caractérisée en ce que** le matériau dérivé du bois est un matériau fibreux dérivé du bois, plus particulièrement un matériau fibreux dérivé du bois de densité moyenne, un matériau fibreux dérivé du bois de haute densité (HDF), un aggloméré ou un contre-plaqué.

6. Système (15) comprenant au moins une lamelle (1) selon l'une des revendications 1 à 5, ainsi qu'une entretoise (12), dans lequel l'entretoise (12) est conçue pour être enfichée sur l'au moins une lamelle (1).

7. Système (15) selon la revendication 6, **caractérisé en ce que** la distance (A) indiquée par l'entretoise (12) correspond à au moins 0,1 fois et au maximum à 1,5 fois la largeur (B) de l'au moins une lamelle (1).

8. Procédé de formation d'une surface de paroi ou de plafond (F) par la pose de plusieurs lamelles en forme de réglettes (1) selon l'une des revendications 1 à 5, dans lequel le procédé comprend au moins une répétition des étapes suivantes :
retrait d'un film de protection (9) d'une bande adhésive (8a) pré-montée sur une lamelle en forme de réglette (1) ;
collage de la lamelle (1) sur un support à la distance (A) d'une lamelle (1) déjà fixée au support.

9. Procédé selon la revendication 8, **caractérisé en ce que** la distance (A) correspond au moins à 0,1 fois et au maximum à 1,5 fois la largeur (B) de la lamelle (1) déjà fixée au support.

10. Procédé selon la revendication 8 ou 9, comprenant en outre les étapes suivantes avant le collage de la lamelle (1) :
enfichage d'au moins une entretoise (12) sur la lamelle (1) à coller ; et
orientation de la lamelle (1) à coller par l'appui de l'entretoise (12) enfichée contre la lamelle (1) déjà fixée au support.

11. Procédé selon la revendication 8 ou 9, comprenant en outre les étapes suivantes avant le collage de la lamelle (1) :
enfichage d'au moins une entretoise (12) sur la lamelle (1) sur la lamelle (1) déjà fixée au support ; et
orientation de la lamelle (1) à coller par l'appui contre l'entretoise (12) enfichée.
